# EUROPEAN PATENT APPLICATION

(11) **EP 3 567 452 A1**
(43) Date of publication of application: **13.11.2019**
(21) Application number: 18213969.1
(22) Date of filing: 19.12.2018
(51) Int. Cl.: G06F 3/01, G06Q 30/06, G06K 9/00

(54) **METHOD AND DEVICE FOR HUMAN-MACHINE INTERACTION IN A STORAGE UNIT, STORAGE UNIT, AND STORAGE MEDIUM**

(30) Priority: 09.05.2018 CN 201810439679
(71) Applicant: Quatius Technology (China) Limited, 222000 Lianyungang Jiangsu (CN)
(72) Inventor: WU, Xiao, Lianyungang, Jiangsu 222000 (CN); HU, Longyao, Lianyungang, Jiangsu 222000 (CN); GENG, Lu, Lianyungang, Jiangsu 222000 (CN); LIU, Runsheng, Lianyungang, Jiangsu 222000 (CN); WU, Jing, Lianyungang, Jiangsu 222000 (CN); FAN, Yuchen, Lianyungang, Jiangsu 222000 (CN); LIU, Huaiguo, Lianyungang, Jiangsu 222000 (CN)
(74) Representative: Noble, Nicholas

(57) **Abstract**

The present disclosure relates to a method and a device for human-machine interaction in a storage unit, a storage unit, and a storage medium. The method includes: detecting a user behavior in a preset area, the preset area including a sensing area of the storage unit; extracting voice information and/or facial information of a user according to the user behavior; determining a target position of an item of interest to the user according to the voice information and/or facial information; obtaining an item identification corresponding to the target position according to a preset corresponding relationship between a position of a stored item and an identification of a stored item in the storage unit; and pushing item information corresponding to the item identification. Based on the disclosure, the user can know the item information that he/she is interested in, and the problems of the traditional mode of shopping consumption can be solved.

## Description

### TECHNICAL FIELD

The present disclosure relates to the field of detection and analysis technologies, and in particular, to a method and a device for human-machine interaction in a storage unit, as well as a storage unit and a storage medium.

### BACKGROUND

With further improvement of people's consumption level and consumption quality, people have a higher requirement for consumption environment and consumption experience.

In a traditional mode of shopping consumption, when a consumer selects an item, it is generally needed to inquire about related information of the item from a salesperson to further know the item. In the process of inquiry, it takes a lot of manpower and time, and the result of the inquiry may be inaccurate or there is no salesperson to be inquired. The traditional mode of shopping consumption has a defect that the consumer cannot know the information of the item in time.

### SUMMARY

Based on the above, in view of above technical problems, it is necessary to provide a method and a device for human-machine interaction in a storage unit, as well as a storage unit and a storage medium, which are capable of providing accurate item information based on a user behavior.

A method for human-machine interaction in a storage unit is provided, and the method includes:
detecting a user behavior in a preset area, the preset area including a sensing area of the storage unit;
extracting voice information and/or facial information of a user according to the user behavior;
determining a target position of an item of interest to the user according to the voice information and/or facial information;
obtaining an item identification corresponding to the target position according to a preset corresponding relationship between a position of a stored item and an identification of a stored item in the storage unit; and
pushing item information corresponding to the item identification.

In an embodiment, the determining a target position of an item of interest to the user according to the voice information and/or facial information includes:
extracting information of an item of interest to the user according to the voice information;
determining the item of interest to the user according to the information of the item of interest to the user; and
obtaining a target position of the item of interest to the user.

In an embodiment, the facial information includes eyeball focus information and a facial expression.

In an embodiment, after extracting voice information and/or facial information of a user according to the user behavior, the method further includes:
extracting position information of the user according to the user behavior;
wherein determining a target position of an item of interest to the user according to the voice information and/or facial information includes:
   determining an item of interest to the user according to the position information; and
   obtaining a target position of the item of interest to the user.

In an embodiment, after detecting a user behavior in a preset area, the method further includes:
pushing item information of a preset recommended item.

In an embodiment, after pushing item information corresponding to the item identification, the method further includes:
receiving user feedback voice information; and
searching for an operation instruction corresponding to the user feedback voice information and responding to the operation instruction.

In an embodiment, after responding to the operation instruction, the method further includes:
storing related information of the user, the related information including the voice information and/or facial information and the user feedback voice information.

A device for human-machine interaction in a storage unit is provided, and the device includes:
a detecting module, configured to detect a user behavior in a preset area, the preset area including a sensing area of the storage unit;
an extracting module, configured to extract voice information and/or facial information of a user according to the user behavior;
a processing module, configured to determine a target position of an item of interest to the user according to the voice information and/or facial information;
an obtaining module, configured to obtain an item identification corresponding to the target position according to a preset corresponding relationship between a position of a stored item and an identification of a stored item in the storage unit; and
a pushing module, configured to push item information corresponding to the item identification.

A storage unit is provided, which includes a storage unit body and a processor. The storage unit body is connected with the processor, and the processor stores computer programs, which, when executed by the processor, cause the processor to implement the following steps:
detecting a user behavior in a preset area, the preset area including a sensing area of the storage unit;
extracting voice information and/or facial information of a user according to the user behavior;
determining a target position of an item of interest to the user according to the voice information and/or facial information;
obtaining an item identification corresponding to the target position according to a preset corresponding relationship between a position of a stored item and an identification of a stored item in the storage unit; and
pushing item information corresponding to the item identification.

A computer readable storage medium is provided, with computer programs stored thereon, which, when executed by the processor, cause the processor to implement the following steps:
detecting a user behavior in a preset area, the preset area including a sensing area of the storage unit;
extracting voice information and/or facial information of a user according to the user behavior;
determining a target position of an item of interest to the user according to the voice information and/or facial information;
obtaining an item identification corresponding to the target position according to a preset corresponding relationship between a position of a stored item and an identification of a stored item in the storage unit; and
pushing item information corresponding to the item identification.

In the above method and device for human-machine interaction in a storage unit, the storage unit and the storage medium, by detecting a user behavior in a preset area, voice information and/or facial information of a user can be extracted according to the user behavior. A target position of an item of interest to the user can be determined by analyzing the voice information and/or facial information. In addition, an item identification corresponding to the target position can be obtained according to a preset corresponding relationship between a position of a stored item and an identification of a stored item in the storage unit. Moreover, item information corresponding to the item identification can be pushed, so that the user can know the item information that he/she is interested in, and the problems of the traditional mode of shopping consumption can be solved.

### BRIEF DESCRIPTION OF DRAWINGS

FIG. 1 is a flowchart schematic diagram illustrating a method for human-machine interaction in a storage unit according to an embodiment.
FIG. 2 is a flowchart schematic diagram illustrating a method for human-machine interaction in a storage unit according to another embodiment.
FIG. 3 is a schematic diagram illustrating determining an item of interest to a user based on eyeball focus information according to an embodiment.
FIG. 4 is a flowchart schematic diagram illustrating a method for human-machine interaction in a storage unit according to another embodiment.
FIG. 5 is structural block diagram illustrating a device for human-machine interaction in a storage unit according to an embodiment.
FIG. 6 is structural block diagram illustrating a device for human-machine interaction in a storage unit according to another embodiment.
FIG. 7 is an internal structural diagram illustrating a computer device according to an embodiment.
FIG. 8 is a structural block diagram illustrating a storage unit according to an embodiment.

### DETAILED DESCRIPTION OF EMBODIMENTS

The objects, technical solutions and advantages of the present disclosure will become more apparent and understandable by further describing the present disclosure in detail with reference to accompanying drawings and embodiments. It should be understood that the specific embodiments described herein are merely used to explain the present disclosure and not used to limit the present disclosure.

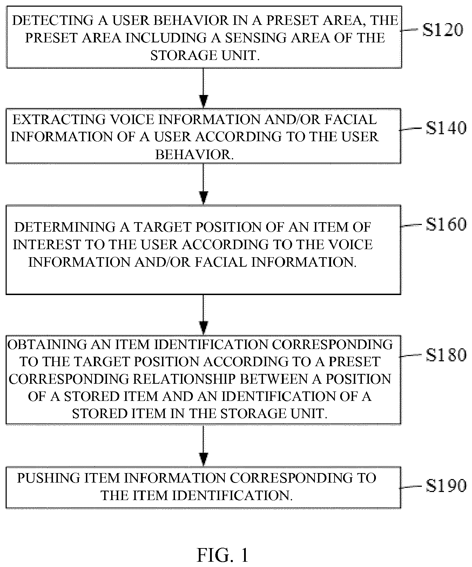

In an embodiment, as shown in FIG. 1, a method for human-machine interaction in a storage unit is provided. The method includes following steps.

S120: detecting a user behavior in a preset area, the preset area including a sensing area of the storage unit.

Detection is generally used in an unattended monitoring field to detect a user behavior in a preset area, which can reduce costs for manual monitoring and improve monitoring efficiency and monitoring accuracy. The detection technology is a basis of the technology of motion detection video, which is widely applied to various fields. A preset area refers to a sensing area of a storage unit. A range threshold of the sensing area can be set as needed. A storage unit refers to a unit for storing items. The user behavior includes a language behavior and a motion behavior of the user in the preset area. By detecting the language behavior and the motion behavior of the user in the preset area, it is possible to provide basis for pushing item information.

S140: extracting voice information and/or facial information of a user according to the user behavior.

The voice information can be extracted by the speech recognition technology according to the language behavior of the user. The speech recognition technology also becomes the automatic speech recognition technology, which is aimed to convert vocabulary content in a human voice into a computer readable input. The speech recognition technology extracts the voice information of the user, analyzes the vocabulary contained in the voice information, and determines an item of interest to the user according to the vocabulary contained in the voice information of the user. The facial information of the user includes eyeball focus information and a facial expression. The eyeball focus information of the user can be extracted by positioning of eyeball focus according to the motion behavior of the user. The facial information of the user can be extracted by the human face recognition technology according to the motion behavior of the user. The eyeball focus information of the user may be used to determine a target position of the item of interest to the user. The facial expression of the user may be used to determine the user's degree of preference for the item placed in the storage unit.

S160: determining a target position of an item of interest to the user according to the voice information and/or facial information.

An intention of the user is analyzed, and the item of interest to the user is determined according to the vocabulary contained in the voice information of the user. For example, the item that the user needs at this time may be considered as a drink, when the voice information of the user includes a vocabulary such as "drink"; the item that the user needs at this time may be considered as cola, when the voice of the user includes a vocabulary such as "cola"; the item that the user needs at this time may be considered as food, when the voice information of the user includes a vocabulary such as "cookie" or "bread"; the item that the user needs at this time may be considered as food, when the voice information of the user includes a vocabulary such as "hungry"; and the item that the user needs at this time may be considered as a drink, when the voice information of the user includes a vocabulary such as "thirsty". The target position of the item is further determined after determining the item that the user needs at this time.

The target position of the item of interest to the user may be determined according to the eyeball focus information in the facial information of the user. Specifically, the eyeball focus information may be analyzed, the eyeball focus of the user may be determined, and the position of the item corresponding to the eyeball focus of the user may be taken as the target position of the item of interest to the user. The degree of preference for an item placed in the storage unit can be determined according to the facial expression in the facial information of the user. For example, when the user approaches the storage unit, the storage unit will push item information of a preset recommended item, and determine whether the user likes the current recommended item or not by analyzing the facial expression of the user when the user looks at the item information of the recommended item. When the user stands in front of the storage unit, it is possible to determine whether the user likes the item facing to the user and placed in the storage unit or not by analyzing the facial expression of the user. The target position of the item is further determined after determining the item that the user likes.

S180: obtaining an item identification corresponding to the target position according to a preset corresponding relationship between a position of a stored item and an identification of a stored item in the storage unit.

The position of a stored item and the identification of a stored item in the storage unit have the corresponding relationship, and the corresponding identification of the stored item may be obtained according to the position of the stored item. In this embodiment, the item identification corresponding to the target position may be obtained according to the target position of the item of interest to the user. For example, cola, Sprite, cookies, and bread are stored in the storage unit, and their positions are A, B, C, and D respectively, corresponding to identifications 1, 2, 3, and 4 respectively. The target position of the item of interest to the user is determined as the position A when the item of interest to the user is determined as cola, furthermore the item identification 1 corresponding to the position A may be obtained.

S190: pushing item information corresponding to the item identification.

Different item identifications correspond to different items. The item identification corresponding to the target position is further obtained, and the item information corresponding to the item identification is pushed, after determining the target position of the item of interest to the user. The item information includes a price, weight, and shelf life of an item, and the like. The item identification and the corresponding item information thereof have been stored in a processor in the storage unit.

In the above method for human-machine interaction in a storage unit, by detecting a user behavior in a preset area, voice information and/or facial information of a user can be extracted according to the user behavior. A target position of an item of interest to the user can be determined by analyzing the voice information and/or facial information. In addition, an item identification corresponding to the target position can be obtained according to a preset corresponding relationship between a position of a stored item and an identification of a stored item in the storage unit. Moreover, item information corresponding to the item identification can be pushed, so that the user can know the item information that he/she is interested in, and the problems of the traditional mode of shopping consumption can be solved.

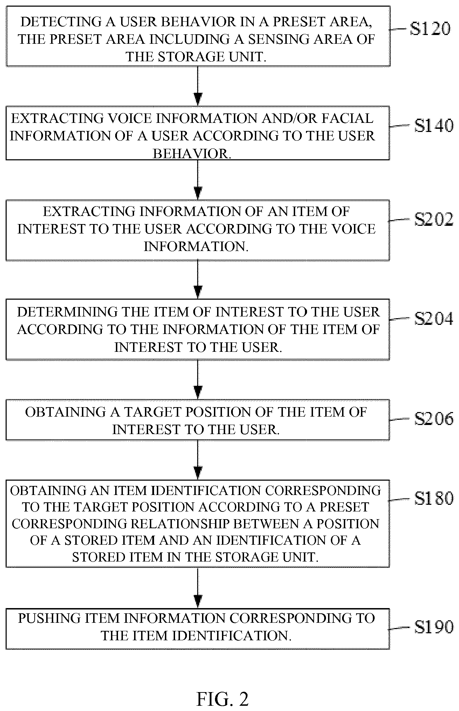

In an embodiment, as shown in FIG. 2, the processing of S160 includes:
S202: extracting information of an item of interest to the user according to the voice information;
S204: determining the item of interest to the user according to the information of the item of interest to the user; and
S206: obtaining a target position of the item of interest to the user.

The information of the item of interest to the user is extracted based on the vocabulary contained in the voice information. Specifically, the vocabulary contained in the voice information of the user is matched with the names, the categories and the uses of the items in the storage unit so as to extract the information of the item of interest to the user. For example, the item of interest to the user at this time may be considered as a drink, when the voice information of the user includes a vocabulary such as "drink"; the item of interest to the user at this time may be considered as cola, when the voice of the user includes a vocabulary such as "cola"; the item of interest to the user at this time may be considered as food, when the voice information of the user includes a vocabulary such as "cookie" or "bread"; the item of interest to the user at this time may be considered as food, when the voice information of the user includes a vocabulary such as "hungry"; and the item of interest to the user at this time may be considered as a drink, when the voice information of the user includes a vocabulary such as "thirsty". The target position of the item is further determined, after determining the item of interest to the user.

In an embodiment, the facial information includes the eyeball focus information and the facial expression.

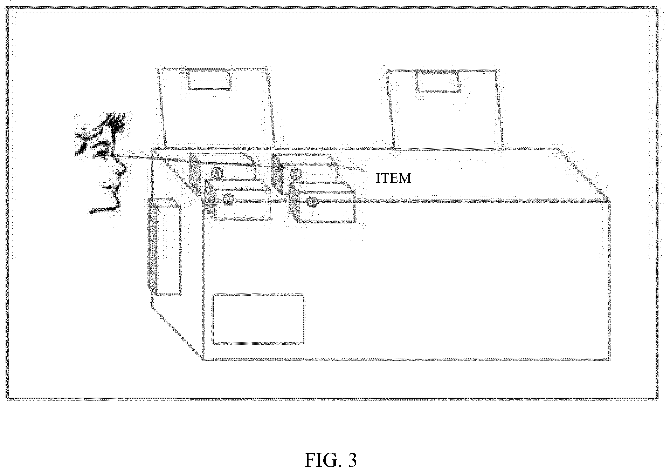

The eyeball focus information includes position information of the eyeball focus of the user. The item of interest to the user may be determined based on the position information of the eyeball focus of the user, that is, the item corresponding to the position of the eyeball focus of the user is taken as the item of interest to the user. As shown in FIG. 3, four items with identifications ①, ②, ③ and ④ respectively are stored in the storage unit. When the item of interest to the user is the item with identification ④, the item with identification ④ is determined as the item of interest to the user by analyzing the position information of the eyeball focus of the user. The facial expression of the user can be recognize by the face recognition technology, and it is possible to determine the degree of preference to an item opposite to the face of the user and placed in the storage unit by the facial expression of the user, so as to determine whether the item opposite to the face of the user is the item of interest to the user or not.

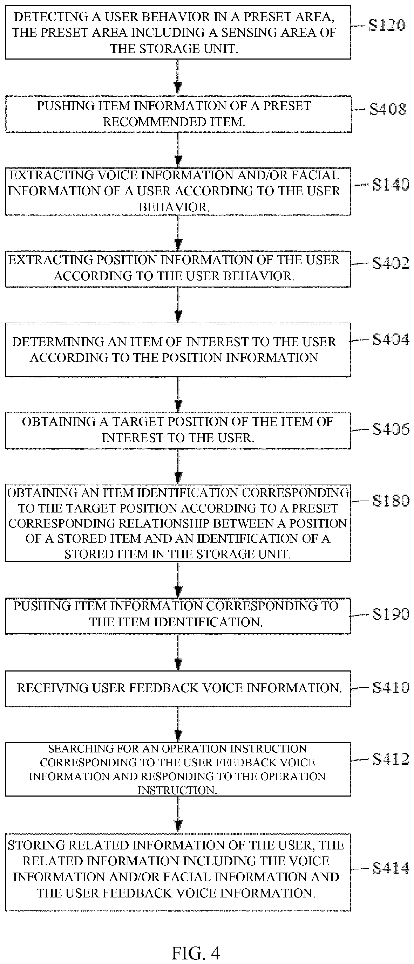

In an embodiment, as shown in FIG. 4, after the processing of S140, the method for human-machine interaction in a storage unit further includes:
S402: extracting position information of the user according to the user behavior.

And the processing of S160 includes:
S404: determining an item of interest to the user according to the position information; and
S406: obtaining a target position of the item of interest to the user.

The position information of the user may be extracted based on the user behavior, and the target position of the item of interest to the user is determined based on the position information and the voice information and/or facial information. For example, it may be determined that the target position of the item of interest to the user is in the left side of the storage unit, when the user is standing on the left side of the storage unit.

In an embodiment, as shown in FIG. 4, after the processing of S120, the method for human-machine interaction in a storage unit further includes:
S408: pushing item information of a preset recommended item.

The item information of the preset recommended item is pushed when the user is constantly approaching the preset area, after detecting the user behavior in the preset area. The recommended item includes the best-selling item in the storage unit, and welcome information is also pushed to attract the user to the storage unit at the time of pushing the item information of the preset recommended item.

In an embodiment, as shown in FIG. 4, after the processing of S190, the method for human-machine interaction in a storage unit further includes:
S410: receiving user feedback voice information; and
S412: searching for an operation instruction corresponding to the user feedback voice information and responding to the operation instruction.

After pushing the item information corresponding to the item identification, the processing proceeds to receiving the user feedback voice information, searching for the operation instruction corresponding to the user feedback voice information, and responding to the operation instruction. The operation instruction includes pushing detailed information of the item corresponding to the item identification and pushing the item information of the preset recommended item. For example, after the item information corresponding to the item identification is pushed, if the user would like to know more about the detailed information of the item, it is possible to receive the voice information of "know more about" fed back from the user, search for the operation instruction corresponding to the voice information of "know more about", and push the detailed information of the item corresponding to the item identification. Instead, if the user does not want to know more about the detailed information of the item, it is possible to receive the voice information of "no interest" fed back from the user, search for the operation instruction corresponding to the voice information of "no interest", and in turn push the item information of the preset recommended item instead of the item information corresponding to the item identification. The detailed information of the item includes a price, weight, a title and shelf life of the item.

In an embodiment, after the processing of S421, the method for human-machine interaction in a storage unit further includes:
S414: storing related information of the user, the related information including the voice information and/or facial information and the user feedback voice information.

The stored related information of the user may be used for data analysis, and may realize accurate push at the next time that the user approaches the storage unit.

It should be understood that these steps are not necessarily performed sequentially as an order indicated by the arrows, although the various steps in the flowcharts of FIGS. 1-4 are sequentially shown as indicated by the arrows. These steps are performed without strict order restriction, and these steps may be performed in other orders, except as explicitly stated herein. Moreover, at least some of the steps in FIGS. 1-4 may include a plurality of sub-steps or a plurality of stages that are not necessarily performed at the same time, but may be performed at different times. These sub-steps or stages are not necessarily performed sequentially, but may be performed in turns or alternately with at least some of the other steps or the sub-steps or the stages of the other steps.

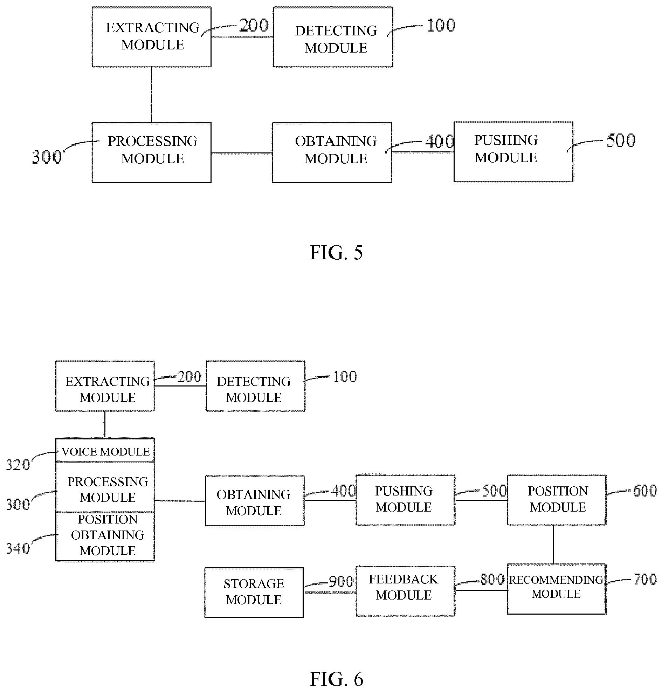

In an embodiment, as shown in FIG. 5, a device for human-machine interaction in a storage unit is provided. The device includes a detecting module 100, an extracting module 200, a processing module 300, an obtaining module 400 and a pushing module 500.

The detecting module 100 is configured to detect a user behavior in a preset area, the preset area including a sensing area of the storage unit.

The extracting module 200 is configured to extract voice information and/or facial information of a user according to the user behavior.

The processing module 300 is configured to determine a target position of an item of interest to the user according to the voice information and/or facial information.

The obtaining module 400 is configured to obtain an item identification corresponding to the target position according to a preset corresponding relationship between a position of a stored item and an identification of a stored item in the storage unit.

The pushing module 500 is configured to push item information corresponding to the item identification.

In an embodiment, as shown in FIG. 6, the processing module 300 includes a voice module 320, which is configured to:
extract information of an item of interest to the user according to the voice information;
determine the item of interest to the user according to the information of the item of interest to the user; and
obtain a target position of the item of interest to the user.

In an embodiment, as shown in FIG. 6, the device for human-machine interaction in a storage unit further includes a position module 600, which is configured to:
extract position information of the user according to the user behavior.

The processing module 300 includes a position obtaining module 340, which is configured to:
determine an item of interest to the user according to the position information; and
obtain a target position of the item of interest to the user.

In an embodiment, as shown in FIG. 6, the device for human-machine interaction in a storage unit further includes a recommending module 700, which is configured to push the item information of a preset recommended item.

In an embodiment, as shown in FIG. 6, the device for human-machine interaction in a storage unit further includes a feedback module 800, which is configured to:
receive user feedback voice information; and
search for an operation instruction corresponding to the user feedback voice information and respond to the operation instruction.

In an embodiment, as shown in FIG. 6, the device for human-machine interaction in a storage unit further includes a storage module 900, which is configured to store related information of the user including the voice information and/or facial information and the user feedback voice information.

In the above device for human-machine interaction in a storage unit, by detecting a user behavior in a preset area, voice information and/or facial information of a user can be extracted according to the user behavior. A target position of an item of interest to the user can be determined by analyzing the voice information and/or facial information. In addition, an item identification corresponding to the target position can be obtained according to a preset corresponding relationship between a position of a stored item and an identification of a stored item in the storage unit. Moreover, item information corresponding to the item identification can be pushed, so that the user can know the item information that he/she is interested in, and the problems of the traditional mode of shopping consumption can be solved.

The specific definition of the device for human-machine interaction in a storage unit may refer to the above definition of the method for human-machine interaction in a storage unit, and the details are not described herein again. Each module of the above device for human-machine interaction in a storage unit may be implemented in all or in part by software, hardware or combinations thereof. Each of the above modules may be embedded in or independent of a processor in a computer device in a form of hardware, or may be stored in a memory in the computer device in a form of software, so as to be easily called by the processor to perform the operation corresponding to each of the above modules.

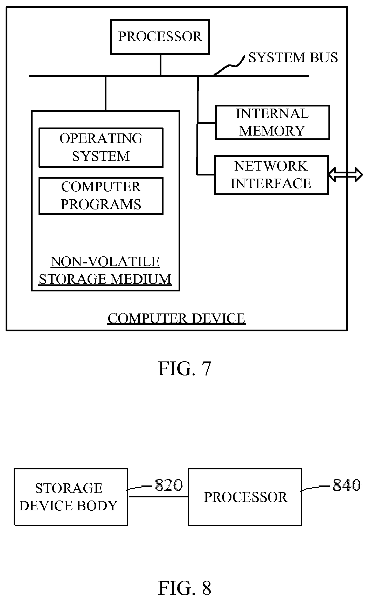

In an embodiment, a computer device is provided. The computer device may be a server, and the internal structural diagram may be as shown in FIG. 7. The computer device includes a processor, a memory, a network interface and database that are coupled via a system bus. The processor of the computer device is configured to provide capabilities of computation and control. The memory of the computer device includes a non-volatile storage medium and an internal memory. An operating system, computer programs and the database are stored in the non-volatile storage medium. The internal memory provides an environment for the operation of the operating system and the computer programs in the non-volatile storage medium. The network interface of the computer device is configured to communicate with an external terminal through a network connection. The computer programs are executed by the processor to implement a method for human-machine interaction of a storage unit.

Those skilled in the art may understand that, the structure shown in FIG. 7 is merely a block diagram showing a partial structure related to the solutions of the present disclosure, which does not forming limitation to the computer device that the solutions of the present disclosure apply to. The specific computer device may include more or less components than those shown in the drawings, or may combine some components, or may have different component arrangement.

A storage unit is provided, as shown in FIG. 8, and includes a storage unit body 820 and a processor 840. The storage unit body 820 is connected to the processor 840, and the processor stores computer programs, which, when executed by the processor, cause the processor to implement steps as below:
detecting a user behavior in a preset area, the preset area including a sensing area of the storage unit;
extracting voice information and/or facial information of a user according to the user behavior;
determining a target position of an item of interest to the user according to the voice information and/or facial information;
obtaining an item identification corresponding to the target position according to a preset corresponding relationship between a position of a stored item and an identification of a stored item in the storage unit; and
pushing item information corresponding to the item identification.

The storage unit body includes a detector and a display. The storage unit body is configured to place the stored items. The detector is configured to detect the user behavior in a preset range based on the instruction of the processor. The display is configured to display the item information corresponding to the item identification pushed by the processor, the information of a recommended item, welcome information, and detailed information of the item based on the instruction of the processor.

In the above storage unit, by detecting a user behavior in a preset area, voice information and/or facial information of a user can be extracted according to the user behavior. A target position of an item of interest to the user can be determined by analyzing the voice information and/or facial information. In addition, an item identification corresponding to the target position can be obtained according to a preset corresponding relationship between a position of a stored item and an identification of a stored item in the storage unit. Moreover, and item information corresponding to the item identification can be pushed, so that the user can know the item information that he/she is interested in, and the problems of the traditional mode of shopping consumption can be solved.

In an embodiment, a computer device is provided, and includes a memory and a processor. The memory stores computer programs which, when executed by the processor, cause the processor to implement steps as below:
detecting a user behavior in a preset area, the preset area including a sensing area of the storage unit;
extracting voice information and/or facial information of a user according to the user behavior;
determining a target position of an item of interest to the user according to the voice information and/or facial information;
obtaining an item identification corresponding to the target position according to a preset corresponding relationship between a position of a stored item and an identification of a stored item in the storage unit; and
pushing item information corresponding to the item identification.

In the above computer device, by detecting a user behavior in a preset area, voice information and/or facial information of a user can be extracted according to the user behavior. A target position of an item of interest to the user can be determined by analyzing the voice information and/or facial information. In addition, an item identification corresponding to the target position can be obtained according to a preset corresponding relationship between a position of a stored item and an identification of a stored item in the storage unit. Moreover, and item information corresponding to the item identification can be pushed, so that the user can know the item information that he/she is interested in, and the problems of the traditional mode of shopping consumption can be solved.

In an embodiment, the processor implements steps as below when executing the computer programs:
extracting information of an item of interest to the user according to the voice information;
determining the item of interest to the user according to the information of the item of interest to the user; and
obtaining a target position of the item of interest to the user.

In an embodiment, the processor implements steps as below when executing the computer programs:
extracting position information of the user according to the user behavior;
determining an item of interest to the user according to the position information; and
obtaining a target position of the item of interest to the user.

In an embodiment, the processor implements steps as below when executing the computer programs:
pushing item information of a preset recommended item.

In an embodiment, the processor implements steps as below when executing the computer programs:
receiving user feedback voice information; and
searching for an operation instruction corresponding to the user feedback voice information and responding to the operation instruction.

In an embodiment, the processor implements steps as below when executing the computer programs:
storing related information of the user, the related information including the voice information and/or facial information and the user feedback voice information.

In an embodiment, a computer readable storage medium is provided, with computer programs stored thereon, which, when executed by a processor, cause the processor to implement steps as below:
detecting a user behavior in a preset area, the preset area including a sensing area of the storage unit;
extracting voice information and/or facial information of a user according to the user behavior;
determining a target position of an item of interest to the user according to the voice information and/or facial information;
obtaining an item identification corresponding to the target position according to a preset corresponding relationship between a position of a stored item and an identification of a stored item in the storage unit; and
pushing item information corresponding to the item identification.

In the above storage medium, by detecting a user behavior in a preset area, voice information and/or facial information of a user is extracted according to the user behavior. A target position of an item of interest to the user is determined by analyzing the voice information and/or facial information. In addition, an item identification corresponding to the target position is obtained according to a preset corresponding relationship between a position of a stored item and an identification of a stored item in the storage unit. Moreover, item information corresponding to the item identification is pushed, so that the user can know the item information that he/she is interested in, and the problems of the traditional mode of shopping consumption can be solved.

In an embodiment, the processor implements steps as below when executing the computer programs:
extracting information of an item of interest to the user according to the voice information;
determining the item of interest to the user according to the information of the item of interest to the user; and
obtaining a target position of the item of interest to the user.

In an embodiment, the processor implements steps as below when executing the computer programs:
extracting position information of the user according to the user behavior;
determining an item of interest to the user according to the position information; and
obtaining a target position of the item of interest to the user.

In an embodiment, the processor implements steps as below when executing the computer programs:
pushing item information of a preset recommended item.

In an embodiment, the processor implements steps as below when executing the computer programs:
receiving user feedback voice information; and
searching for an operation instruction corresponding to the user feedback voice information and responding to the operation instruction.

In an embodiment, the processor implements steps as below when executing the computer programs:
storing related information of the user, the related information including the voice information and/or facial information and the user feedback voice information.

Those skilled in the art may understand that, all or part of the processes of the methods in the above embodiments may be implemented by related hardware which is instructed by the computer programs. The computer programs may be stored in a non-volatile computer readable storage medium, which, when executed, may implement the processes of the embodiments of the above methods. Any reference to the memory, the storage, the database, or the other medium used in the various embodiments provided in the present disclosure may include a non-volatile and/or volatile memory. The non-volatile memory may include a read only memory (ROM), a programmable read only memory (PROM), an electrically programmable read only memory (EPROM), an electrically erasable programmable read only memory (EEPROM) or a flash memory. The volatile memory may include a random access memory (RAM) or an external cache memory. As illustration and not limitation, RAM is available in a variety of formats, such as static RAM (SRAM), dynamic RAM (DRAM), synchronous DRAM (SDRAM), double data rate SDRAM (DDRSDRAM), enhanced SDRAM (ESDRAM), sync link DRAM (SLDRAM), Rambus direct RAM (RDRAM), direct memory bus dynamic RAM (DRDRAM), and memory bus dynamic RAM (RDRAM).

The solutions of the present disclosure will be illustrated below with reference to an embodiment.

When a user approaches a sensing area of a storage unit, welcome information and information of a recommended item will be pushed to attract the user. The user behavior in the preset area is detected, and voice information and/or facial information and position information is extracted according to the user behavior. A target position of an item of interest to the user is determined according to the voice information and/or facial information and the position information, an item identification corresponding to the target position is obtained according to a preset corresponding relationship between a position of a stored item and an identification of a stored item in the storage unit. Item information corresponding to the item identification is pushed, and user feedback voice information is received. Detailed information of the item will be pushed if the user would like to know more about the detailed information of the item. Otherwise, the pushing of the item information corresponding to the item identification will be stopped, and the information of the recommended item will be pushed, if the user is not interest in the recommended item information.

The technical features of the above embodiments may be combined arbitrarily. To simplify the description, all the possible combinations of the technical features of the above embodiments are not described. However, all of the combinations of these technical features should be considered as within the scope recorded in the description, as long as the combinations of the technical features have no collision with each other.

The above-described embodiments merely represent several embodiments of the present disclosure, and the description thereof is more specific and detailed, but it should not be construed as limiting the scope of the present disclosure. It should be noted that, for those skilled in the art, several deformations and improvements may be made without departing from the concept of the present disclosure, and these are all within the protection scope of the present disclosure. Therefore, the protection scope of the present disclosure shall be subject to the appended claims.

## Claims

1. A method for human-machine interaction in a storage unit, comprising:
detecting a user behavior in a preset area, the preset area including a sensing area of the storage unit;
extracting voice information and/or facial information of a user according to the user behavior;
determining a target position of an item of interest to the user according to the voice information and/or facial information;
obtaining an item identification corresponding to the target position according to a preset corresponding relationship between a position of a stored item and an identification of a stored item in the storage unit; and
pushing item information corresponding to the item identification.

2. The method according to claim 1, wherein the determining a target position of an item of interest to the user according to the voice information and/or facial information comprises:
extracting information of an item of interest to the user according to the voice information;
determining the item of interest to the user according to the information of the item of interest to the user; and
obtaining a target position of the item of interest to the user.

3. The method according to claim 1, wherein the facial information comprises eyeball focus information and a facial expression.

4. The method according to claim 1, wherein after extracting voice information and/or facial information of a user according to the user behavior, the method further comprises:
extracting position information of the user according to the user behavior;
wherein determining a target position of an item of interest to the user according to the voice information and/or facial information comprises:
determining an item of interest to the user according to the position information; and
obtaining a target position of the item of interest to the user.

5. The method according to claim 1, wherein after detecting a user behavior in a preset area, the method further comprises:
pushing item information of a preset recommended item.

6. The method according to claim 1, wherein after pushing item information corresponding to the item identification, the method further comprises:
receiving user feedback voice information; and
searching for an operation instruction corresponding to the user feedback voice information and responding to the operation instruction.

7. The method according to claim 6, wherein after responding to the operation instruction, the method further comprises:
storing related information of the user, the related information including the voice information and/or facial information and the user feedback voice information.

8. A device for human-machine interaction in a storage unit, comprising:
a detecting module, configured to detect a user behavior in a preset area, the preset area including a sensing area of the storage unit;
an extracting module, configured to extract voice information and/or facial information of a user according to the user behavior;
a processing module, configured to determine a target position of an item of interest to the user according to the voice information and/or facial information;
an obtaining module, configured to obtain an item identification corresponding to the target position according to a preset corresponding relationship between a position of a stored item and an identification of a stored item in the storage unit; and
a pushing module, configured to push item information corresponding to the item identification.

9. A storage unit, comprising a storage unit body and a processor, the storage unit body being connected with the processor, the processor storing computer programs, which, when executed by the processor, cause the processor to implement steps of the method according to any one of claims 1 to 7.

10. A computer readable storage medium, storing computer programs, wherein when the computer programs are executed by the processor, the processor implements steps of the method according to any one of claims 1 to 7.

## Amended claims

### Amended claims in accordance with Rule 137(2) EPC.

1. A method for human-machine interaction between a user and a storage unit having a storage unit body (820) in which a stored item is placed, comprising:
detecting a user behavior in a preset area, the preset area including a sensing area surrounding the storage unit;
extracting voice information and/or facial information of a user according to the user behavior;
determining a target position of an item of interest to the user according to the voice information and/or facial information;
obtaining an item identification corresponding to the target position according to a preset corresponding relationship between a position of a stored item and an identification of a stored item in the storage unit; and
pushing item information corresponding to the item identification,
wherein after pushing item information corresponding to the item identification, the method further comprises:
receiving user feedback voice information; and
searching for an operation instruction corresponding to the user feedback voice information and responding to the operation instruction, the operation instruction comprising pushing detailed information of the item corresponding to the item identification or pushing the item information of a preset recommended item.

2. The method according to claim 1, wherein the determining a target position of an item of interest to the user according to the voice information and/or facial information comprises:
extracting information of an item of interest to the user according to the voice information;
determining the item of interest to the user according to the information of the item of interest to the user; and
obtaining a target position of the item of interest to the user.

3. The method according to claim 1, wherein the facial information comprises eyeball focus information and a facial expression.

4. The method according to claim 1, wherein after extracting voice information and/or facial information of a user according to the user behavior, the method further comprises:
extracting position information of the user according to the user behavior;
wherein determining a target position of an item of interest to the user according to the voice information and/or facial information comprises:
determining an item of interest to the user according to the position information; and
obtaining a target position of the item of interest to the user.

5. The method according to claim 1, wherein after detecting a user behavior in a preset area, the method further comprises:
pushing item information of a preset recommended item.

6. The method according to claim 1, wherein after responding to the operation instruction, the method further comprises:
storing related information of the user, the related information including the voice information and/or facial information and the user feedback voice information.

7. A device for human-machine interaction between a user and a storage unit having a storage unit body (820) in which a stored item is placed, comprising:
a detecting module (100), configured to detect a user behavior in a preset area, the preset area including a sensing area surrounding the storage unit;
an extracting module (200), configured to extract voice information and/or facial information of a user according to the user behavior;
a processing module (300), configured to determine a target position of an item of interest to the user according to the voice information and/or facial information;
an obtaining module (400), configured to obtain an item identification corresponding to the target position according to a preset corresponding relationship between a position of a stored item and an identification of a stored item in the storage unit; and
a pushing module (500), configured to push item information corresponding to the item identification,
a feedback module (800) configured to receive user feedback voice information; and
search for an operation instruction corresponding to the user feedback voice information and responding to the operation instruction, the operation instruction comprising pushing detailed information of the item corresponding to the item identification or pushing the item information of a preset recommended item.

8. A computer readable storage medium, storing computer programs, wherein when the computer programs are executed by the processor, the processor implements steps of the method according to any one of claims 1 to 6.
